# FASCICULE DE BREVET EUROPEEN

(11) **EP 2 026 984 B1**
(45) Date de publication et mention de la délivrance du brevet: **22.12.2010**
(21) Numéro de dépôt: 07725176.7
(22) Date de dépôt: 14.05.2007
(51) Int. Cl.: B60C 15/06

(54) **PNEUMATIQUE AVEC ANCRAGE COMPORTANT UN ÉLÉMENT DE RENFORT BIÉLASTIQUE**
REIFEN MIT ANKER MIT EINEM BIELASTISCHEN VERSTÄRKUNGSELEMENT
TYRE WITH ANCHOR COMPRISING A BIELASTIC REINFORCING ELEMENT

(30) Priorité: 22.05.2006 FR 0604646
(43) Date de publication de la demande: 25.02.2009
(73) Titulaire: Société de Technologie MICHELIN, 63000 Clermont-Ferrand (FR); Michelin Recherche et Technique S.A., 1763 Granges-Paccot (CH)
(72) Inventeur: HUYGHE, Jean-Michel, F-63100 Clermont-Ferrand (FR)
(74) Mandataire: Randl, Oliver Georg
(86) Numéro de dépôt international: PCT/EP2007/004257
(87) Numéro de publication internationale: WO 2007/134743

(56) Documents cités:
- EP-A2- 1 142 695
- WO-A-2004/033789
- WO-A-2006/035560
- FR-A1- 2 140 290
- GB-A- 804 885
- US-B1- 6 659 148

## Description

L'invention concerne un pneumatique comportant au moins un élément de renfort biélastique circonférentiel étant constituée d'un tissu biélastique, par exemple du type montré par WO 2006/035560.

De façon classique, les pneumatiques sont sans cesse soumis à de nombreuses sollicitations mécaniques d'origines diverses, en fonction notamment du type de véhicule, du style de conduite du conducteur, du type d'itinéraire emprunté, de l'état général du réseau routier sur lequel le véhicule évolue, etc. Chacun de ces paramètres a un impact direct ou indirect sur le type et l'intensité des sollicitations et contraintes mécaniques que le pneumatique est amené à subir lors de son utilisation. En outre, la zone basse du pneumatique est particulièrement concernée par ces phénomènes puisque cette zone concentre une grande partie des contraintes, notamment dû au fait de la présence du crochet de jante, qui, en étant en contact direct avec la zone basse du pneumatique, engendre une zone de concentration de contraintes.

En conséquence, l'objet de l'invention consiste en un pneumatique comprenant les caratéristiques de la revendication 1. Grâce à une telle mise en oeuvre de l'élément de renfort biélastique, les propriétés mécaniques du pneumatique telles que l'endurance et la résistance aux chocs sont améliorées. L'élément de renfort biélastique procure un effet d'absorption et de diffusion de l'énergie bénéfique à ces propriétés.

L'utilisation d'un élément de renfort biélastique améliore la résistance à la propagation des fissures. L'endurance et la durée de vie des produits peuvent ainsi être améliorée. Une telle architecture est particulièrement avantageuse pour les pneumatiques de type tourisme. En effet, ce type de pneumatique est susceptible d'être fortement sollicité dans certains types d'utilisation, tel qu'en virage à haute vitesse et/ou dans certains types d'environnement hostiles. La zone basse est alors sujette à de fortes contraintes. La présente invention permet de diminuer les effets néfastes de telles contraintes.

Selon une première variante de ce mode de réalisation, la section retournée de la structure de renfort de type carcasse se subdivise en au moins deux séries d'extrémités filaires axialement espacées et disposées circonférentiellement en alternance, et ledit crochet entoure individuellement chaque série d'extrémités ; selon une seconde variante de ce mode de réalisation, la section retournée de la structure de renfort de type carcasse se subdivise en au moins deux séries d'extrémités filaires axialement espacées et disposées circonférentiellement en alternance, et ledit crochet entoure conjointement les deux séries d'extrémités.

Selon un autre mode de réalisation avantageux, le pneumatique comporte deux structures de renfort, comportant chacune une portion retournée, chacune étant pourvue d'une extrémité, ledit élément de renfort biélastique coopérant avec au moins l'une de ces deux extrémités. Selon divers modes de réalisation avantageux, l'élément de renfort biélastique forme un crochet en forme de U inversé entourant soit une seule extrémité, soit simultanément les deux extrémités.

Selon encore un autre mode de réalisation avantageux, le pneumatique comporte une languette circonférentielle pourvue d'éléments de renforts filaires, juxtaposée à au moins une portion d'une extrémité, ledit élément de renfort biélastique coopérant avec ladite languette. Selon un mode de réalisation avantageux, l'élément de renfort biélastique forme un crochet en forme de U inversé entourant l'extrémité de ladite languette. Selon une variante de réalisation, l'élément de renfort biélastique forme un crochet en forme de U inversé entourant à la fois l'extrémité de ladite languette et l'extrémité d'une section retournée.

De manière avantageuse, le tissu biélastique présente au moins l'une et de préférence l'ensemble des caractéristiques suivantes :
- un taux d'allongement élastique d'au moins 8%,
- une taille de maille inférieure ou égale à 150 mailles par décimètre.

Ledit tissu comprend de préférence au moins un matériau choisi parmi les polyamides, les polyesters, la rayonne, le coton, la laine, l'aramide, la soie, le lin.

De manière avantageuse, tissu comprend une certaine proportion de fils élastiques.

Egalement de manière avantageuse, le tissu ou tricot présente une épaisseur pouvant se situer entre 0,2 mm et 2 mm, et de préférence entre 0,4 et 1,2 mm.

Le tissu ou tricot présente une masse surfacique de préférence généralement située entre 70 et 700 g/m2, et de préférence entre 140 et 410 g/m2.

Selon un autre mode de réalisation avantageux, le tricot biélastique est composée d'au moins un polymère choisi parmi les polymères thermodurcissables, les polymères thermoplastiques.

De manière avantageuse, le tissu utilisé est un tricot biélastique, c'est-à-dire un tissu à mailles dont les boucles formant les mailles sont susceptibles de se déplacer les unes par rapport aux autres dans le sens du tricotage et dans le sens perpendiculaire au tricotage. Par biélastique, on entend que le matériau en question possède des propriétés le rendant élastique dans au moins deux directions sensiblement perpendiculaires, et de préférence dans toutes les directions.

L'utilisation de fibres élastomériques pour réaliser ce tissu ou tricot n'est donc pas indispensable. On peut éventuellement en prévoir en faible proportion pour favoriser la mise en oeuvre et faciliter le retour élastique.

Si toutefois on ne souhaite qu'un découplage mécanique, l'utilisation d'une matrice élastomérique peut permettre d'amplifier la capacité de découplage.

Le terme de tissu biélastique recouvre également des structures qui ont la possibilité de se déformer élastiquement de manière réversible mais qui ne sont pas forcément obtenues par tricotage. Il peut s'agir en particulier de structures obtenues au crochet ou des assemblages sous forme de bouclettes ou des aiguilletés.

L'entrelacement des boucles forme un réseau déformable de manière élastique dans deux directions sensiblement perpendiculaires. Dans le cas avantageux où on utilise un tricot biélastique, la capacité de déformation de ce tricot biélastique selon l'invention résulte en particulier de la structure en tricot, les fibres constituant le tricot glissant les unes par rapport aux autres dans le réseau maillé. De manière générale, le taux d'allongement élastique du tricot biélastique selon l'invention est d'au moins 10% dans au moins une des deux directions d'allongement. Il est avantageusement de 50% ou plus, voire plus particulièrement de 100% ou plus. Ces propriétés s'entendent avant la mise en oeuvre du tricot dans le pneumatique selon l'invention.

Le sens de pose du tricot biélastique sur les zones à protéger est avantageusement tel que la direction du tricot ayant le taux d'allongement le plus important est parallèle à la direction de la contrainte la plus élevée agissant sur ladite zone.

D'autres caractéristiques et avantages de l'invention apparaîtront à la lecture d'un exemple de réalisation d'un pneumatique conforme à l'invention, en référence aux figures en annexe, dans lesquelles :

-la figure 1 représente une coupe transversale d'une moitié d'un pneumatique connu, avec un flanc et une portion du sommet, avec un premier exemple de positionnement d'un élément de renfort biélastique ;

-la figure 2 représente la zone basse d'un pneumatique connu avec un second exemple de positionnement d'un élément de renfort biélastique ;

-la figure 3 représente une coupe similaire à celle de la figure 2, avec un troisième exemple de positionnement d'un élément de renfort biélastique ;

-la figure 4 représente une coupe similaire à celle de la figure 1, avec un exemple de positionnement d'un élément de renfort biélastique selon l'invention;

-la figure 5 représente une coupe similaire à celle de la figure 2, avec un autre exemple de positionnement d'un élément de renfort biélastique selon l'invention;

-la figure 6 représente une coupe similaire à celle de la figure 2, avec un autre exemple de positionnement d'un élément de renfort biélastique selon l'invention;

-la figure 7 représente une coupe similaire à celle de la figure 1, avec un autre exemple de positionnement d'un élément de renfort biélastique selon l'invention;

-les figures 8, 9 et 10 illustrent des variantes de réalisation de l'invention avec différentes formes de languettes disposées en zone basse, près de la zone d'ancrage ;

-les figures 11 et 12 représentent des variantes de réalisation de l'invention avec deux structures de renfort de type carcasse.

On entend par « axiale » une direction parallèle à l'axe de rotation du pneumatique ; cette direction peut être « axialement intérieure » lorsqu'elle est dirigée vers l'intérieur du pneumatique et « axialement extérieure » lorsqu'elle est dirigée vers l'extérieur du pneumatique.

Le terme « structure de renfort de sommet » est utilisé dans le texte. De manière usuelle, cet élément est souvent désigné par le terme « armature de sommet ». ,

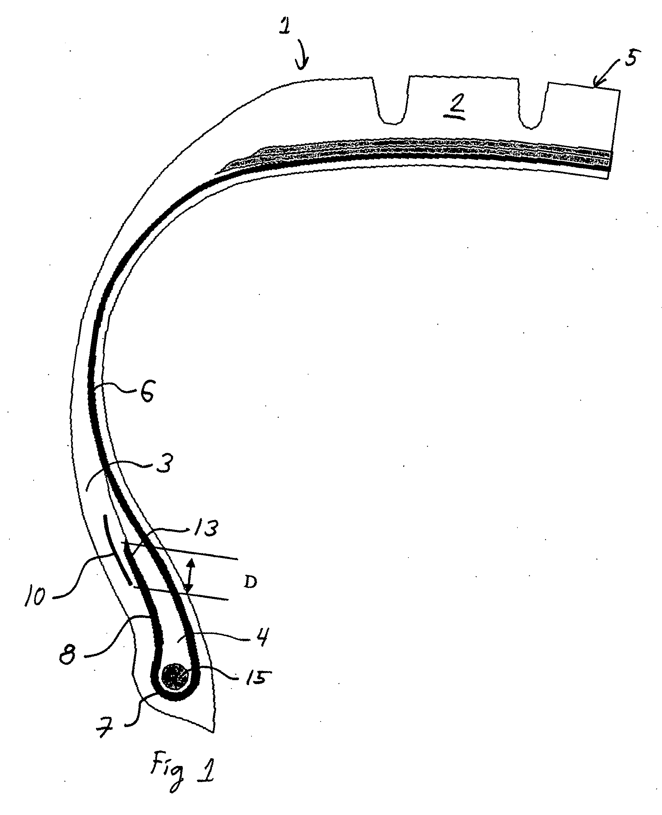

La figure 1 représente de manière schématique une demie coupe radiale d'un pneumatique 1 à armature de carcasse. Ce pneumatique 1 comporte un sommet 2, des flancs 3, des bourrelets 4, une structure de renfort de type carcasse 6 s'étendant de préférence d'un bourrelet à l'autre. Le sommet 2 est surmonté d'une bande de roulement 5. Les structures de renfort 6 sont ancrées dans le bourrelet de façon classique, par enroulement autour d'une tringle 15. Un tel type d'ancrage comporte un retournement de ladite structure de renfort de type carcasse 6 autour d'une tringle 15 de façon à former, le long d'une portion radialement intérieure de la tringle, une portion de retournement 7 de la structure de renfort depuis un point axialement intérieur à la tringle vers un point axialement extérieur à celle-ci puis s'étendant radialement extérieurement depuis la base de ladite tringle de façon à former une section retournée 8 se terminant par une extrémité libre 13.

Au moins un élément de renfort biélastique 10 est disposé à proximité de la section retournée 8, préférablement à proximité de la zone de l'extrémité 13. A la figure 1, l'élément 10 est positionné axialement extérieurement à la section retournée 8, avec un alignement radial de sorte que l'extrémité 13 de cette portion 8 soit localisée sensiblement entre les deux extrémités de l'élément 10. Selon cet exemple de la figure 1, au moins une des extrémités de l'élément 10 se trouve à une distance D radiale d'au moins 5 mm de l'extrémité 13.

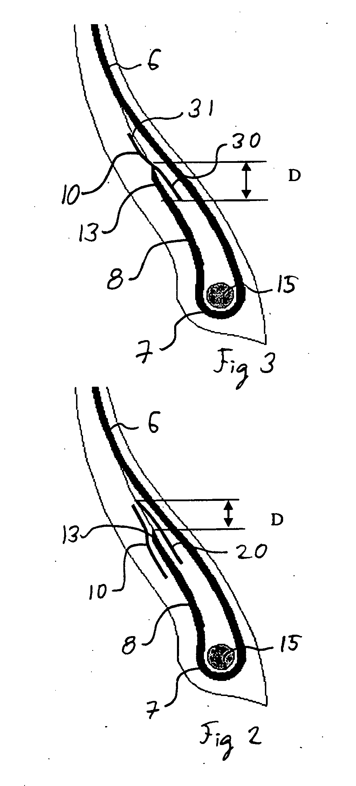

A la figure 2, l'élément 10 est positionné de façon similaire à l'exemple de la figure 1. Un second élément 20, est disposé axialement intérieurement par rapport à la section retournée 8, avec un alignement radial de sorte que l'extrémité 13 soit localisée sensiblement entre les deux extrémités de l'élément 20. Selon cet exemple de la figure 2, au moins une des extrémités de l'élément 20 se trouve à une distance D radiale d'au moins 5 mm de l'extrémité 13. L'extrémité radialement externe de l'élément 20 peut être localisée axialement extérieurement par rapport à l'extrémité 13.

Dans l'exemple de la figure 3, l'élément 10 comporte une première portion 30, disposée axialement intérieurement par rapport à la section retournée 8. L'élément 10 comporte également une seconde portion 31, se prolongeant radialement extérieurement au-delà de l'extrémité 13 de la section retournée 8. Cette portion 31 se prolonge axialement extérieurement par rapport à ladite extrémité 13.

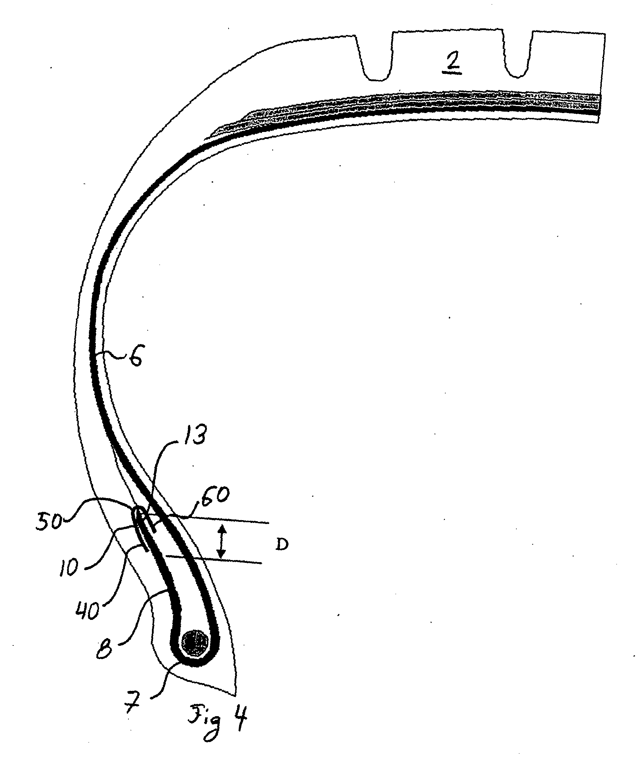

Dans les exemples des figures 4 à 6, l'élément de renfort biélastique forme un crochet en forme de U inversé, entourant au moins partiellement au moins une extrémité 13, 131, 132, d'une section retournée 8. Ainsi, à la figure 4, ledit élément de renfort biélastique comporte une première portion 40, sensiblement radiale, disposée axialement extérieurement par rapport à l'extrémité 13, une seconde portion 60, sensiblement radiale, disposée axialement intérieurement par rapport à l'extrémité 13, et une troisième portion 50, curviligne ou en forme d'arc de cercle, reliant l'une à l'autre les deux premières portions 40 et 60 en passant radialement extérieurement par rapport à l'extrémité 13.

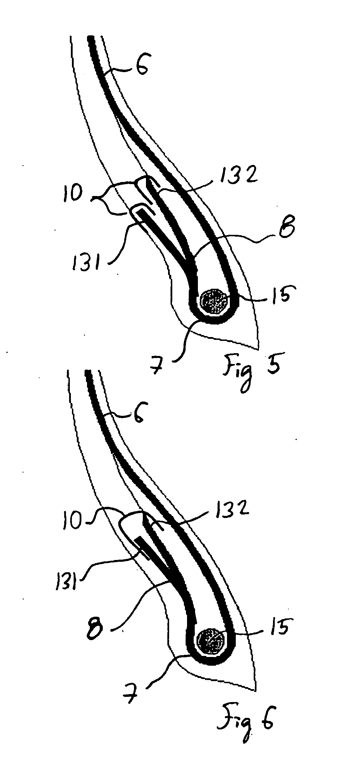

Aux figures 5 et 6, la section retournée 8 de la structure de renfort de type carcasse se subdivise en au moins deux séries d'extrémités filaires 131, 132, axialement espacées et disposées circonférentiellement en alternance: dans l'exemple de la figure 5, ledit crochet entoure individuellement chaque série d'extrémités 131 et 132 ; dans l'exemple de la figure 6, ledit crochet entoure conjointement les deux séries d'extrémités 131 et 132.

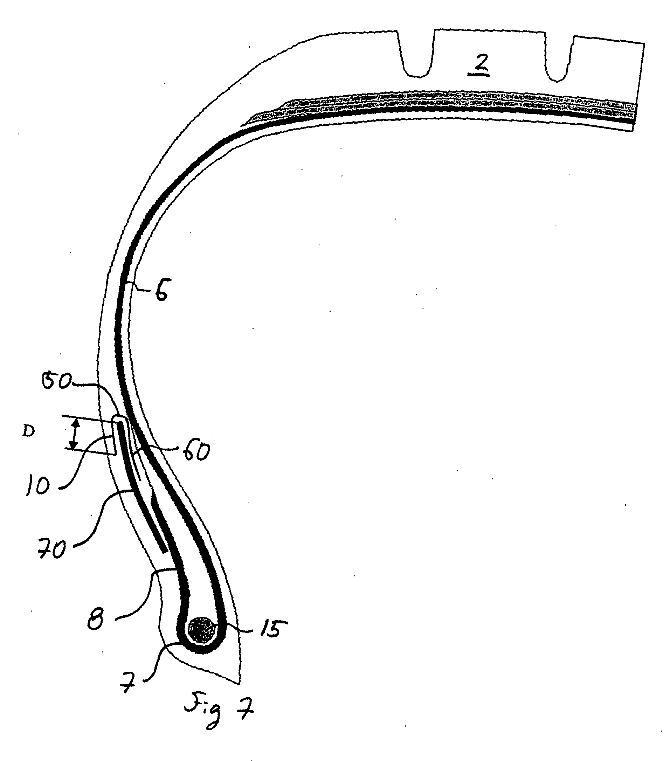

De façon similaire à l'exemple de la figure 4, la figure 7, présente un exemple dans lequel ledit élément de renfort biélastique forme également un crochet en forme de U inversé. Par contre, dans cette exemple, le crochet entoure au moins partiellement au moins une extrémité d'un raidisseur 70. Un tel raidisseur comporte par exemple une série de fils métalliques ou textiles, et est destiné à procurer une rigidité relativement importante à la zone basse du pneumatique.

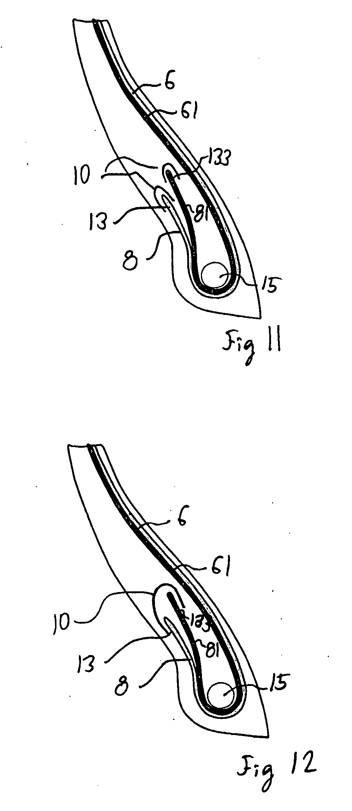

Dans les exemples de réalisation des figures 11 et 12, le pneumatique comporte deux structures de renfort 6 et 61 comportant chacune une portion retournée 8 et 81, chacune étant pourvue d'une extrémité 13 et 133, ledit élément de renfort biélastique 10 coopérant avec au moins l'une de ces deux extrémités. Dans l'exemple de la figure 11, un élément de renfort biélastique est prévu pour chaque extrémité de structure de renfort. Dans cet exemple, les éléments de renfort sont disposés en forme de U inversé s'emboîtant sur l'extrémité. Selon l'invention, une multiplicité d'autres formes peuvent être utilisées pour l'agencement des éléments de renfort.

Dans l'exemple de la figure 12, un seul élément de renfort biélastique est prévu pour coopérer simultanément avec les deux extrémités de structure de renfort. Dans cet exemple, l'élément de renfort est disposé en forme de U inversé s'emboîtant sur les extrémités. Selon l'invention, une multiplicité d'autres formes peuvent être utilisées pour l'agencement de l'élément de renfort.

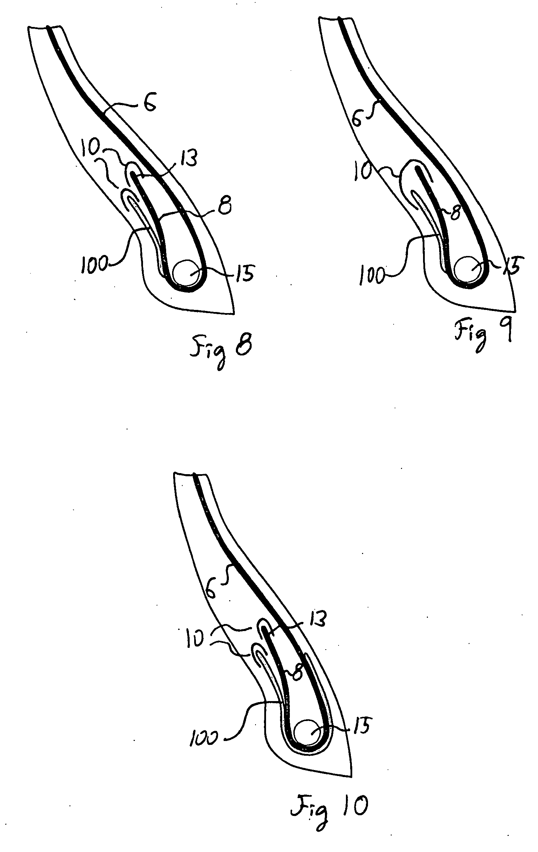

Dans les exemples de réalisation des figures 8, 9 et 10, le pneumatique comporte une languette circonférentielle 100 de type connu, pourvue d'éléments de renforts filaires, juxtaposée à au moins une portion d'une extrémité 13, ledit élément de renfort biélastique 10 coopérant avec ladite languette. Dans l'exemple de la figure 8, un élément de renfort biélastique est prévu pour chaque extrémité, soit celle de la languette et celle de la structure de renfort. Dans cet exemple, les éléments de renfort sont disposés en forme de U inversé s'emboîtant sur chaque extrémité. Selon l'invention, une multiplicité d'autres formes peuvent être utilisées pour l'agencement des éléments de renfort.

Dans l'exemple de la figure 9, un seul élément de renfort biélastique est prévu pour coopérer simultanément avec les deux extrémités, soit celle de la languette et celle de la structure de renfort. Dans cet exemple, l'élément de renfort est disposé en forme de U inversé s'emboîtant sur les extrémités. Selon l'invention, une multiplicité d'autres formes peuvent être utilisées pour l'agencement de l'élément de renfort. La figure 10 présente une variante de réalisation avec une languette se prolongeant de manière connue sous la tringle vers le côté axialement intérieur de la zone basse. Les extrémités de languette et de la structure de renfort peuvent être protégées de façon similaires aux exemples des figures 8 et 9.

L'élément de renfort 10 est avantageusement constitué d'un tricot élastique de faible densité apparente et très déformable. Ceci permet une élasticité par glissement des fils et déformation des mailles. Il permet dans une certaine mesure un découplage mécanique entre les différents composants architecturaux entre lesquelles il s'interpose. Par ailleurs, l'avantage d'un tricot élastique est clairement d'avoir suffisamment de souplesse de structure pour suivre les déformations du pneumatique. On pourra ainsi choisir différentes natures de matériau pour former ce tricot élastique : son épaisseur, son taux de vide et sa densité sont directement liés à ce choix et à la structure du tricot (diamètre du fil, nombre de mailles au dm et serrage).

Le tissu biélastique présente au moins l'une et de préférence l'ensemble des caractéristiques suivantes :
- un taux d'allongement élastique d'au moins 8%,
- une taille de maille inférieure ou égale à 150 mailles par décimètre.

Par exemple, des essais effectués avec un tricot comportant 240 mailles par décimètre d'un côté, et 235 mailles par décimètre de l'autre côté, ont permis l'obtention de résultats fort intéressants, notamment en terme de résistance à la fissuration.

De manière générale, le tricot biélastique selon l'invention est constitué de fibres synthétiques, de fibres naturelles ou d'un mélange de ces fibres. A titre de fibres synthétiques, le tricot biélastique selon l'invention peut comprendre au moins un type de fibres choisi parmi le polyamide 6, le polyamide 6,6 (nylon), les polyesters, etc.

Ainsi, de manière avantageuse, ledit tissu comprend au moins un matériau choisi parmi les polyamides, les polyesters, la rayonne, le coton, la laine, l'aramide, la soie, le lin.

Selon une variante de réalisation avantageuse, une certaine proportion de fils élastiques tels qu'en polyuréthane, latex, caoutchouc naturel ou synthétique peut s'avérer utile afin d'assurer le rappel élastique, ce qui permet de faciliter la mise en oeuvre du tissu. Ainsi, à titre de tricot biélastique selon l'invention, on peut citer le tricot commercialisé par Milliken sous la référence 2700 composé de 82% de fibre de polyamide 6 et de 18% de polyuréthane de 44 dTex.

Le tissu ou tricot biélastique selon l'invention présente une épaisseur pouvant se situer entre 0,2 mm et 2 mm, et de préférence entre 0,4 et 1,2 mm.

Sa masse surfacique est généralement située entre 70 et 700 g/m2, et de préférence entre 140 et 410 g/m2.

Selon une variante de réalisation, le tricot biélastique est composée d'au moins un polymère choisi parmi les polymères thermodurcissable, les polymères thermoplastiques.

De manière préférentielle, le tricot élastique pourra présenter une masse volumique d'au moins 0,02 g/cm3, mesurée de manière classique, cette masse volumique pouvant aller jusqu'à 0,50 g/cm3.

Une autre caractéristique du tricot élastique utilisable dans le cadre de l'invention est son taux de vide. De manière générale selon l'invention, le taux de vide sera avantageusement d'au moins 40 % pour que le tricot soit suffisamment compressible. Ce taux de vide peut-être calculé en comparant la masse volumique du tricot avec celle du matériau compact constituant sa matrice, mesurée par tout moyen classique.

Parmi les matériaux non élastomériques pouvant constituer la matrice de ces tricots, on peut citer :
- les fibres textiles naturelles, comme le coton, la laine, le lin, le chanvre, la soie, etc.
- les fibres textiles artificielles comme la rayonne;
- des fibres textiles synthétiques par exemple en polyesters, polyamides, aramides, polychlorure de vinyle, polyoléfines etc.
- des fibres minérales par exemple en verre, silice, ou laine de roche.

Parmi les matériaux élastomériques, on peut citer le caoutchouc naturel, le polybutadiène, le SBR, le polyuréthane, etc.

## Revendications

1. Pneumatique comprenant au moins une structure de renfort de type carcasse (6) s'étendant circonférentiellement depuis un bourrelet (4) vers un flanc (3) et ancrée de chaque côté du pneumatique dans ledit bourrelet dont la base est destinée à être montée sur un siège de jante, ledit ancrage comportant un retournement de ladite structure de renfort de type carcasse (6) autour d'une tringle (15) de façon à former, le long d'une portion radialement intérieure de la tringle, une portion de retournement (7) de la structure de renfort depuis un point axialement intérieur à la tringle vers un point axialement extérieur à celle-ci puis s'étendant radialement extérieurement depuis la base de ladite tringle de façon à former une section retournée (8) se terminant par une extrémité libre (13), chaque bourrelet (4) se prolongeant radialement vers l'extérieur par un flanc, les flancs rejoignant radialement vers l'extérieur une bande de roulement (5), ledit pneumatique comportant par ailleurs au moins un élément de renfort biélastique (10) circonférentiel étant constituée d'un tissu biélastique dans lequel ledit tissu utilisé est un tricot biélastique, soit un tissu à mailles dont les boucles formant les mailles sont susceptibles de se déplacer les unes par rapport aux autres dans le sens du tricotage et dans le sens perpendiculaire au tricotage, ledit au moins un élément de renfort biélastique (10) étant agencé de façon à s'étendre le long de la zone d'extrémité (13) de la section retournée (8) de la structure de renfort de type carcasse (6) et comportant une première portion (40), sensiblement radiale, disposée axialement extérieurement par rapport à la section retournée de la structure de renfort de type carcasse, une seconde portion (60), sensiblement radiale, disposée axialement intérieurement par rapport à la section retournée de la structure de renfort de type carcasse, une troisième portion (50), curviligne, reliant l'une à l'autre les deux premières portions en passant radialement extérieurement par rapport à l'extrémité (13) de la section retournée (8) de la structure de renfort de type carcasse, ces différentes portions formant un crochet en forme de U inversé entourant au moins une extrémité d'une section retournée.

2. Pneumatique selon la revendication 1, dans lequel la section retournée (8) de la structure de renfort de type carcasse se subdivise en au moins deux séries d'extrémités (131,132) filaires axialement espacées et disposées circonférentiellement en alternance, et ledit crochet en forme de U inversé entoure individuellement chaque série d'extrémités (131, 132).

3. Pneumatique selon la revendication 1, dans lequel la section retournée (8) de la structure de renfort de type carcasse se subdivise en au moins deux séries d'extrémités (131,132) filaires axialement espacées et disposées circonférentiellement en alternance, et ledit crochet entoure conjointement chaque série d'extrémités (131,132).

4. Pneumatique selon la revendication 1, comportant deux structures de renfort (6, 61), comportant chacune une portion retournée (8, 81), chacune étant pourvue d'une extrémité (13, 133), ledit élément de renfort biélastique (10) coopérant avec au moins l'une de ces deux extrémités.

5. Pneumatique selon l'une des revendications précédentes, comportant une languette circonférentielle (100) pourvue d'éléments de renforts filaires, juxtaposée à au moins une portion d'une extrémité (13), ledit élément de renfort biélastique (10) coopérant avec ladite languette.

6. Pneumatique selon l'une des revendications précédentes, dans lequel le tissu biélastique (10) présente au moins l'une et de préférence l'ensemble des caractéristiques suivantes :
- un taux d'allongement élastique d'au moins 8%,
- une taille de maille inférieure ou égale à 150 mailles par décimétre.

7. Pneumatique selon l'une des revendications précédentes, dans lequel ledit tissu (10) comprend au moins un matériau choisi parmi les polyamides, les polyesters, la rayonne, le coton, la laine, l'aramide, la soie, le lin.

8. Pneumatique selon l'une des revendications précédentes, dans lequel le tissu (10) comprend une certaine proportion de fils élastiques.

9. Pneumatique selon l'une des revendications précédentes, dans lequel le tissu ou tricot présente une épaisseur pouvant se situer entre 0,2 mm et 2 mm, et de préférence entre 0,4 et 1,2 mm.

10. Pneumatique selon l'une des revendications précédentes, dans lequel le tissu ou tricot présente une masse surfacique généralement située entre 70 et 700 g/m2, et de préférence entre 140 et 410 g/m2.

11. Pneumatique selon l'une des revendications précédentes, dans lequel le tricot biélastique (10) est composée d'au moins un polymère choisi parmi les polymères thermodurcissables, les polymères thermoplastiques.

## Claims

1. Tyre comprising at least one carcass-type reinforcing structure (6) extending circumferentially from a bead (4) to a sidewall (3) and anchored on each side of the tyre in said bead, the base of which latter is designed to be mounted on a wheel rim seat, said anchoring comprising a turning up of said carcass-type reinforcing structure (6) around a bead core (15) in such a way as to form, along a radially inner portion of the bead core, a turning-up portion (7) of the reinforcing structure from a point axially inside the bead core to a point axially outside the bead core, and then extending radially out from the base of said bead core in such a way as to form a turned-up section (8) ending in a free end (13), each bead (4) being continued radially outwardly by a sidewall, the sidewalls meeting, in the radially outward direction, a tread (5), said tyre also comprising at least one circumferential bielastic reinforcing element (10) made of a bielastic fabric, in which the fabric employed is a bielastic knitted fabric, that is a stitched fabric, the loops forming the stitches of which are capable of moving relative to each other in the knitting direction and in the direction perpendicular to the knitting, said at least one bielastic reinforcing element (10) being arranged so as to extend along the end zone (13) of the turned-up section (8) of the carcass-type reinforcing structure (6), wherein said bielastic reinforcing element (10) comprises a first, substantially radial portion (40) arranged axially outwardly relative to the turned-up section of the carcass-type reinforcing structure, a second, substantially radial portion (60) arranged axially inwardly relative to the turned-up section of the carcass-type reinforcing structure, and a third, curvilinear portion (50) connecting together the first two portions by passing radially outwardly relative to the end (13) of the turned-up section (8) of the carcass-type reinforcing structure, these various portions forming an inverted U-shaped hook enclosing at least one end of a turned-up section.

2. Tyre according to Claim 1, in which the turned-up section (8) of the carcass-type reinforcing structure is divided into at least two series of thread ends (131, 132) that are spaced out axially and are arranged such that they alternate circumferentially, and said inverted U-shaped hook individually encloses each series of ends (131, 132).

3. Tyre according to Claim 1, in which the turned-up section (8) of the carcass-type reinforcing structure is divided into at least two series of thread ends (131, 132) that are spaced out axially and are arranged such that they alternate circumferentially, and said hook conjointly encloses each series of ends (131, 132).

4. Tyre according to Claim 1, comprising two reinforcing structures (6, 61), each comprising a turned-up portion (8, 81), each being provided with an end (13, 133), and said bielastic reinforcing element (10) being engaged on at least one of these two ends.

5. Tyre according to one of the preceding claims, comprising a circumferential strip (100) provided with threadlike reinforcing elements and juxtaposed on at least one portion of an end (13), said bielastic reinforcing element (10) being engaged on said strip.

6. Tyre according to one of the preceding claims, in which the bielastic fabric (10) has at least one and preferably all of the following properties:
- an elastic elongation ratio of at least 8%, and
- a stitch size less than or equal to 150 stitches per decimetre, and preferably 200 stitches per decimetre.

7. Tyre according to one of the preceding claims, in which said fabric (10) comprises at least one material selected from polyamides, polyesters, rayon, cotton, wool, aramid, silk and flax.

8. Tyre according to one of the preceding claims, in which the fabric (10) comprises a certain proportion of elastic threads.

9. Tyre according to one of the preceding claims, in which the fabric or knitted fabric has a thickness between 0.2 mm and 2 mm, and preferably between 0.4 and 1.2 mm.

10. Tyre according to one of the preceding claims, in which the fabric or knitted fabric has a mass per unit area of generally between 70 and 700 g/m², and preferably between 140 and 410 g/m².

11. Tyre according to one of the preceding claims, in which the bielastic knitted fabric (10) is composed of at least one polymer selected from heatsetting polymers and thermoplastic polymers.

## Patentansprüche

1. Luftreifen, der mindestens eine Verstärkungsstruktur vom Typ Karkasse (6) enthält, die sich in Umfangsrichtung von einem Wulst (4) zu einer Flanke (3) erstreckt und auf jeder Seite des Luftreifens in dem Wulst verankert ist, dessen Basis dazu bestimmt ist, auf einen Felgensitz montiert zu werden, wobei die Verankerung einen Umschlag der Verstärkungsstruktur vom Typ Karkasse (6) um einen Wulstkern (15) aufweist, um entlang eines radial inneren Abschnitts des Wulstkerns einen Umschlagabschnitt (7) der Verstärkungsstruktur von einem bezüglich des Wulstkerns axial innen liegenden Punkt zu einem zu diesem axial außen liegenden Punkt und sich dann radial außen von der Basis des Wulstkerns erstreckend zu formen, um einen umgeschlagenen Teilabschnitt (8) zu bilden, der in einem freien Ende (13) endet, wobei jeder Wulst (4) sich radial nach außen durch eine Flanke verlängert, wobei die Flanken radial nach außen an einen Laufstreifen (5) anschließen, wobei der Luftreifen außerdem mindestens ein bielastisches Umfangsverstärkungselement (10) aufweist, das aus einem bielastischen Gewebe besteht, wobei das verwendete Gewebe ein bielastisches Strickgewebe ist, d.h. ein Maschengewebe, dessen die Maschen bildenden Schlaufen sich zueinander in Richtung des Gestricks und in der Richtung lotrecht zum Gestrick verschieben können, wobei das mindestens eine bielastische Verstärkungselement (10) so eingerichtet ist, dass es sich entlang der Endzone (13) des umgeschlagenen Teilabschnitts (8) der Verstärkungsstruktur vom Typ Karkasse (6) erstreckt und einen ersten im Wesentlichen radialen Abschnitt (40), der bezüglich des umgeschlagenen Teilabschnitts der Verstärkungsstruktur vom Typ Karkasse axial außen angeordnet ist, einen zweiten im Wesentlichen radialen Abschnitt (60), der bezüglich des umgeschlagenen Teilabschnitts der Verstärkungsstruktur vom Typ Karkasse axial innen angeordnet ist, und einen dritten gekrümmten Abschnitt (50) aufweist, der die zwei ersten Abschnitte verbindet, indem er bezüglich des Endes (13) des umgeschlagenen Teilabschnitts (8) der Verstärkungsstruktur vom Typ Karkasse radial außen verläuft, wobei diese verschiedenen Abschnitte einen Haken in Form eines umgedrehten U formen, der mindestens ein Ende eines umgeschlagenen Teilabschnitts umgibt.

2. Luftreifen nach Anspruch 1, bei dem der umgeschlagene Teilabschnitt (8) der Verstärkungsstruktur vom Typ Karkasse in mindestens zwei Reihen von fadenförmigen Enden (131, 132) unterteilt ist, die axial einen Abstand zueinander haben und in Umfangsrichtung abwechselnd angeordnet sind, und der Haken in Form eines umgedrehten U jede Reihe von Enden (131, 132) einzeln umgibt.

3. Luftreifen nach Anspruch 1, bei dem der umgeschlagene Teilabschnitt (8) der Verstärkungsstruktur vom Typ Karkasse in mindestens zwei Reihen von fadenförmigen Enden (131, 132) unterteilt ist, die axial einen Abstand zueinander haben und in Umfangsrichtung abwechselnd angeordnet sind, und der Haken jede Reihe von Enden (131, 132) gemeinsam umgibt.

4. Luftreifen nach Anspruch 1, der zwei Verstärkungsstrukturen (6, 61) aufweist, die je einen umgeschlagenen Abschnitt (8, 81) aufweisen, welche je mit einem Ende (13, 133) versehen sind, wobei das bielastische Verstärkungselement (10) mit mindestens einem dieser zwei Enden zusammenwirkt.

5. Luftreifen nach einem der vorhergehenden Ansprüche, der eine Umfangszunge (100) aufweist, die mit fadenförmigen Verstärkungselementen versehen ist, neben mindestens einem Abschnitt eines Endes (13) angeordnet ist, wobei das bielastische Verstärkungselement (10) mit der Zunge zusammenwirkt.

6. Luftreifen nach einem der vorhergehenden Ansprüche, bei dem das bielastische Gewebe (10) mindestens eines der und vorzugsweise alle folgenden Merkmale aufweist:
- einen elastischen Dehnungsgrad von mindestens 8%,
- eine Maschengröße geringer als oder gleich 150 Maschen pro Dezimeter.

7. Luftreifen nach einem der vorhergehenden Ansprüche, bei dem das Gewebe (10) mindestens einen Werkstoff enthält, der unter den Polyamiden, Polyestern, Rayon, Baumwolle, Wolle, Aramid, Seide, Leinen ausgewählt wird.

8. Luftreifen nach einem der vorhergehenden Ansprüche, bei dem das Gewebe (10) einen bestimmten Anteil an elastischen Fäden enthält.

9. Luftreifen nach einem der vorhergehenden Ansprüche, bei dem das Gewebe oder Strickgewebe eine Dicke hat, die zwischen 0,2 mm und 2 mm, und vorzugsweise zwischen 0,4 und 1,2 mm liegen kann.

10. Luftreifen nach einem der vorhergehenden Ansprüche, bei dem das Gewebe oder Strickgewebe eine flächenbezogene Masse hat, die allgemein zwischen 70 und 700 g/m², und vorzugsweise zwischen 140 und 410 g/m² liegt.

11. Luftreifen nach einem der vorhergehenden Ansprüche, bei dem das bielastische Strickgewebe (10) aus mindestens einem Polymer besteht, das aus den wärmehärtbaren und den thermoplastischen Polymeren ausgewählt wird.
